# EUROPÄISCHE PATENTANMELDUNG

(11) **EP 0 885 835 A2**
(43) Veröffentlichungstag der Anmeldung: **23.12.1998**
(21) Anmeldenummer: 98110576.0
(22) Anmeldetag: 09.06.1998
(51) Int. Cl.: B66F 7/10

(54) **Vorrichtung zur Demontage von Gegenständen**

(30) Priorität: 09.06.1997 DE 19724235
(71) Anmelder: LSD Umwelt- und Recyclingtechnologie GmbH, 63457 Hanau (DE)
(72) Erfinder: Borree, Frank, Dipl.-Ing., 63755 Alzenau (DE)
(74) Vertreter: Stoffregen, Hans-Herbert, Dr. Dipl.-Phys.

(57) **Zusammenfassung**

Die Erfindung bezieht sich auf eine Vorrichtung (10) zur Demontage von Gegenständen (11) mit einer im Abstand zu einer Bodenfläche verlaufenden Aufnahme (12) für zumindest einen Gegenstand sowie einem zugeordneten Arbeitsbereich (28). Um Totzeiten, in denen die Vorrichtung nicht genutzt werden kann, soweit wie möglich zu reduzieren, wird vorgeschlagen, dass die Aufnahme eine um eine vertikal verlaufende Achse (15) drehbare Drehanordnung (16, 18, 20) mit zumindest zwei Auflagebereichen (22, 24) für die Gegenstände umfasst, wobei bei Ausrichtung eines Auflagebereichs auf den Arbeitsbereich ein anderer Auflagebereich auf einen Aufgabe- und Entnahmebereich (32) für einen zu demontierenden bzw. demontierten Gegenstand ausgerichtet ist.

## Beschreibung

Die Erfindung bezieht sich auf eine Vorrichtung zur Demontage von Gegenständen, insbesondere Trockenlegung von Fahrzeugen, mit einer im Abstand zu einer Bodenfläche verlaufenden Aufnahme für zumindest einen Gegenstand sowie einem zugeordneten Arbeitsbereich, vorzugsweise umfassend eine Arbeitsplattform.

Nicht mehr benötigte Gegenstände sollen heutzutage recycelt werden. Dabei muss eine Trennung zwischen wiederverwertbaren und solchen Stoffen erfolgen, die einer Sonderbehandlung unterzogen und gegebenenfalls deponiert werden müssen. Insbesondere bei der Verwertung von Altfahrzeugen müssen Konzepte zur Verfügung gestellt werden, die ein sicheres Trennen der Bestandteile auf kostengünstigem Weg ermöglichen. Dabei ist die Trockenlegung von besonderer Bedeutung, um eine große Menge an verwertbaren Materialien zu gewinnen.

Zu berücksichtigen ist dabei, dass von den jährlich 2,5 Millionnen in der Bundesrepublik Deutschland stillgelegten Fahrzeugen der weitaus größte Teil in Altautoverwertungsbetriebe gelangt.

Um eine Trockenlegung zu ermöglichen, wird nach DE 94 16 394 U1 eine Vorrichtung beschrieben, die aus einer Stahlkonstruktion besteht, die im wesentlichen vier vertikal verlaufende Stützen und von diesen ausgehende horizontale Längsstreben umfasst, auf die das trockenzulegende Fahrzeug positioniert wird. Im Bodenbereich kann eine Auffangwanne vorgesehen sein, die von einem begehbaren Rost abgedeckt ist. Durch das Vorhandensein von vier vertikalen Stützen zur Aufnahme von Kraftfahrzeugen wird die Zugänglichkeit im Bodenbereich stark eingeschränkt.

Eine Kobination einer Hebebühne und eines Arbeitspodestes wird in der DE 36 30 541 C2 beschrieben.

Aus dem DE 296 13 392 ist eine Vorrichtung zur Demontage von insbesondere Kraftfahrzeugen mit einer höhenverstellbaren Aufnahme für die Kraftfahrzeuge bekannt. Alternativ kann die der Aufnahme zugeordnete Arbeitsplattform höhenverstellbar ausgebildet sein.

Drehbare Hebebühnen für Fahrzeuge sind aus dem DE-GM 1 703 613 oder der GB 347,602 bekannt.
Bei den bekannten Vorrichtungen werden demontierte Fahrzeuge durch zu demontierende Fahrzeuge mit einem Gabelstapler ausgetauscht. Während dieser Zeit ist die Vorrichtung ungenutzt. Da die Wechselzeit je nach Transportstrecke bis zu 30 % der eigentlichen Trockenlegungszeit beträgt, ist der Wirkungsgrad entsprechender Vorrichtungen unerwünscht eingeschränkt.

Der vorliegenden Erfindung liegt das Problem zu Grunde, eine Vorrichtung der eingangs genannten Art so weiterzubilden, dass Totzeiten, in denen die Vorrichtung nicht genutzt werden kann, soweit wie möglich reduziert werden.

Erfindungsgemäß wird das Problem im Wesentlichen dadurch gelöst, dass die Aufnahme eine um eine vertikal verlaufende Achse drehbare Drehanordnung mit zumindest zwei Auflagebereichen für Gegenstände umfasst, wobei bei Ausrichtung eines Auflagebereichs auf den Arbeitsbereich ein anderer Auflagebereich auf einen Aufnahme- und Entnahmebereich für einen zu demontierenden bzw. demontierten Gegenstand ausgerichtet ist.

Insbesondere ist vorgesehen, dass die Vorrichtung zwei diametral zur Drehachse verlaufende Auflagebereiche umfasst. Alternativ besteht auch die Möglichkeit, dass die Vorrichtung mehrere gleichmäßig auf einen Kreisumfang verteilte Auflagebereiche mit der Drehachse als Mittelpunkt umfasst.

Durch die erfindungsgemäße Lehre kann ein kontinuierliches Demontieren von Gegenständen, insbesondere das Trockenlegen von Fahrzeugen erfolgen, ohne dass bei der Entnahme des demontierten Gegenstandes bzw. der Aufgabe eines zu demontierenden Gegenstandes lange Wartezeiten entstehen; denn durch Drehen der Anordnung wird der demontierte Gegenstand in einen Auf-/Abgabebereich bewegt, wobei gleichzeitig ein zu demontierender Gegenstand in den Arbeitsbereich gelangt. Somit wird der Demontageprozess durch den Abtransport bzw. das Zuführen der zu demontierenden bzw. demontierten Gegenstände selbst nicht zeitverzögert.

Bei der Verwendung von zum Beispiel Gabelstaplern im Austausch von demontierten gegen zu demontierenden Fahrzeugen steht ein hinreichend großes Zeitfenster zur Verfügung, so dass ein reibungsloser und quasi kontinuierlicher Demontageprozess möglich ist.

Die Aufnahme selbst kann als Drehteller oder -bühne ausgebildet sein. Vorzugsweise umfasst die Aufnahme jedoch einen Hauptständer wie Säule mit von diesem ausgehender Quertraverse, von der ihrerseits zumindest zwei Längstraversen ausgehen, deren zu jeweils einer Seite der Quertraverse verlaufenden Abschnitte einen Auflagebereich für einen Gegenstand bilden. Dabei kann die Aufnahme gegenüber der vertikal verlaufenden Säule oder mit dieser gedreht werden.

Die Aufnahme selbst kann manuell drehbar sein, wobei dann, wenn die Aufnahme auf einen Arbeitsbereich ausgerichtet ist, eine Blockierbarkeit möglich ist.

Um eine Anpassung an unterschiedliche Bearbeitungsvorgänge zu ermöglichen, kann des Weiteren der Hauptständer längenveränderbar ausgebildet sein.

Der Arbeitsbereich und der Aufnahme- und Entnahmebereich sind durch eine Trennlinie getrennt, die vorzugsweise die Achse durchsetzt oder in deren Nähe verläuft.

Bodenseitig im Arbeitsbereich sollte eine Auffangwanne vorgesehen sein, um herabtropfende Flüssigkeit aufzusammeln.

Ferner können im Bereich der Trennlinie vertikal verlaufende Säulen angeordnet sein, von denen Montageelemente und -einrichtungen wie Entnahmewerkzeuge, Trichter, Absaugeinrichtung etc. ausgehen.

Der Arbeitsbereich selbst ist zumindest bereichsweise von der Arbeitsplattform umgeben, die verschwenkbar, verschiebbar und/oder höhenverstellbar ausgebildet ist. Beim Drehen der Drehanordnung ist somit die Möglichkeit gegeben, dass die Arbeitsplattform eine Behinderung nicht darstellt.

Ferner kann die Arbeitsplattform arbeitsbereichsseitig zumindest abschnittsweise eine Absperrung wie ein Geländer aufweisen, die ihrerseits verschwenkbar und/oder absenkbar ausgebildet ist. Bei einer entsprechenden Ausbildung ist es nicht erforderlich, dass die Arbeitsplattform selbst ortsveränderbar ist.

Die erfindungsgemäße Vorrichtung übt folglich eine Doppelfunktion aus: einerseits als Aufnahme und Halterung eines Kraftfahrzeugs während dessen Trockenlegung und andererseits als Puffer zur Bereitstellung eines zu demontierenden bzw. abzuholenden Fahrzeugs.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines der Zeichnung zu entnehmenden bevorzugten Ausführungsbeispiels.

Es zeigen:

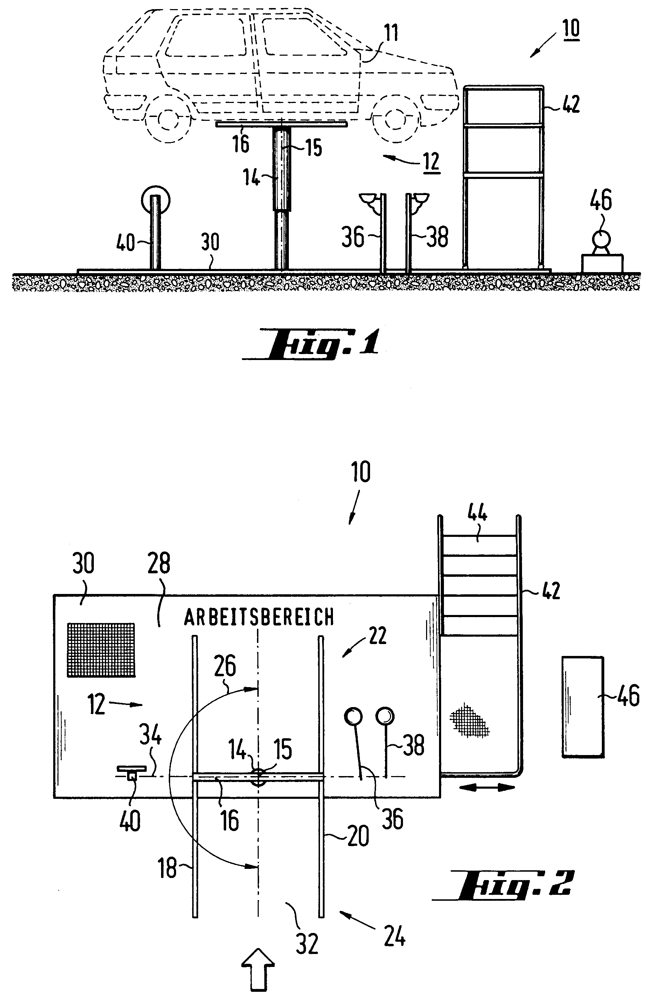

- Fig. 1: eine Seitenansicht einer Vorrichtung zur Demontage von Kraftfahrzeugen und
- Fig. 2: eine Draufsicht der Vorrichtung gemäß Fig. 1.

In den Figuren sind wesentliche Merkmale einer erfindungsgemäßen Vorrichtung 10 zur Demontage von Gegenständen dargestellt, wobei es sich im Ausführungsbeispiel um das Trockenlegen von Kraftfahrzeugen 11 handelt, ohne dass hierdurch eine Einschränkung der erfindungsgemäßen Lehre erfolgen soll.

Die Vorrichtung 10 weist einen vorzugsweise teleskopierbaren Hauptständer 14 mit Quertraverse 16 sowie Längstraversen 18, 20 auf. Die Längstraversen 18, 20 sind im Bereich der Enden der Quertraversen 16 befestigt und bilden Auflagebereiche 22, 24 für zu demontierende bzw. demontierte Fahrzeuge. Die Längs- und Quertraversen 16, 18, 20 mit der Säule 14 bilden folglich eine Aufnahme 12 für zwei Kraftfahrzeuge 11. Die Quertraverse 16 mit den Längstraversen 18, 20 ist drehbar um die Längsachse 15 des Ständers 14; dies wird durch den Halbkreis 26 angedeutet. Die Auflagebereiche 22, 24 können entweder gemeinsam mit dem vertikal verlaufenden Ständer 14 um dessen Längsachse 15 gedreht oder zu dem Ständer 14 selbst drehbar angeordnet sein.

Unabhängig davon wird durch die Drehbarkeit der Anordnung 12 die Möglichkeit gegeben, ein Fahrzeug 11 im Arbeitsbereich 28 der Vorrichtung 10 zu dessen Demontage bzw. Trockenlegung anzuordnen, wobei von dem diametral zu dem Ständer 14 vorhandenen Auflagebereich 24 ein demontiertes Fahrzeug entnommen bzw. ein zu demontierendes Fahrzeug aufgegeben werden kann (Aufgabe- und Entnahmebereich 32). Folglich können die nach dem Stand der Technik immanenten Zeitverzögerungen ausgeschlossen werden, die durch das Aufgeben bzw. Entnehmen von Fahrzeugen in den Arbeitsbereich hinein bzw. aus diesem heraus entstehen.

Der Arbeitsbereich 28 ist bodenseitig von einer Wanne 30 abgedeckt, um herabtropfende Flüssigkeit aufzusammeln. Ferner gehen von einer den Arbeitsbereich 28 vom Entnahmebereich 32 abteilenden Trennlinie 34, die im Bereich der Längsachse 15 des Ständers 14 oder in deren Nähe verläuft, weitere Ständer 36, 38, 40 aus, von denen wiederum verschwenkbare Einrichtungen zur Demontage wie Trockenlegungswerkzeuge, Trichter und Absauglanzen für Getriebe- und Motoröl, Entnahmelanzen für Kühlwasser, Bremsflüssigkeit, Hydrauliköl oder Scheibenwaschwasser ausgehen. Die Entnahmewerkzeuge werden dabei mit Schlauchleitungen direkt mit nicht dargestellten Lagertanks für entsprechende Betriebsmedien verbunden. Zur Beschleunigung der Trockenlegung sind Absaugpumpen vorgesehen. Insoweit wird jedoch auf hinlänglich bekannte Techniken verwiesen.

Um eine gute Zugänglichkeit des zu demontierenden Fahrzeuges 11 sicherzustellen, ist eine verschiebbare Montagebühne 42 vorgesehen, die eine Treppe 44 aufweist. Die Montagebühne 42 kann entsprechend unterschiedlicher Fahrzeuglängen an den Motorraum herangeschoben werden. Damit die Montagebühne 42 beim Drehen der Aufnahme 12, also der Quer- und Längstraversen 16, 18, 20 eine Behinderung nicht darstellt, ist erstere aus dem Drehbereich verschiebbar und kann zum Beispiel über einen Pumpen- und Steuerschrank 46 gefahren werden. Alternativ besteht die Möglichkeit, die Montagebühne 42 zum Beispiel unter Verwendung eines Hubtisches absenk- bzw. anhebbar auszubilden.

Alternativ kann der begehbare Bereich der Plattform 42 auf einem Niveau verlaufen, der unterhalb dem des Kraftfahrzeuges 12 und der Längstraversen 18, 20 liegt. In diesem Fall ist ein Absenken der Arbeitsbühne 42 nicht erforderlich. Ein arbeitsbereichseitig vorhandenes Gitter der Arbeitsbühne 42 als Schutz für das Bedienungspersonal ist in diesem Fall wegzuschwenken bzw. umzulegen.

## Patentansprüche

1. Vorrichtung (10) zur Demontage von Gegenständen, insbesondere Trockenlegung von Fahrzeugen (11), mit einer im Abstand zu einer Bodenfläche verlaufenden Aufnahme (12) für zumindest einen Gegenstand sowie einem zugeordneten Arbeitsbereich (28), vorzugsweise umfassend eine Arbeitsplattform (42),
**dadurch gekennzeichnet,**
dass die Aufnahme (12) eine um eine vertikal verlaufende Achse (15) drehbare Drehanordnung (16, 18, 20) mit zumindest zwei Auflagebereichen (22, 24) für Gegenstände (11) umfasst, wobei bei Ausrichtung eines Auflagebereichs (22) auf den Arbeitsbereich (28) ein anderer Auflagebereich (24) auf einen Aufgabe- und Entnahmebereich (32) für einen zu demontierenden bzw. demontierten Gegenstand (11) ausgerichtet ist.

2. Vorrichtung nach Anspruch 1,
**dadurch gekennzeichnet,**
dass die Aufnahme (12) zwei diametral zur Drehachse (15) verlaufende Auflagebereiche (22, 24) oder mehrere gleichmäßig auf einem Kreisumfang verteilte Auflagebereiche (22, 24) mit der Drehachse (15) als Mittelpunkt umfasst.

3. Vorrichtung nach Anspruch 1 oder 2,
**dadurch gekennzeichnet,**
dass die Aufnahme (12) als Drehteller oder -bühne ausgebildet ist und oder manuele drehbar ist.

4. Vorrichtung nach zumindest einem der vorhergehenden Ansprüche,
**dadurch gekennzeichnet,**
dass die Aufnahme (12) bei Ausrichtung eines Auflagebereichs (22) auf den Arbeitsbereich (28) drehblockierbar ist.

5. Vorrichtung nach zumindest einem der vorhergehenden Ansprüche,
**dadurch gekennzeichnet,**
dass die Aufnahme (12) einen vorzugsweise höhenverstellbaren Hauptständer (14) wie Säule mit von diesem ausgehender Quertraverse (16) umfasst, von der zumindest zwei Längstraversen (18, 20) ausgehen, deren zu jeweils einer Seite der Quertraverse (16) verlaufende Abschnitte einen Auflagebereich (22, 24) für einen Gegenstand (11) bilden, wobei die Aufnahme mit Hauptständer drehbar oder die Aufnahme zu dem Ständer drehbar ausgebildet ist.

6. Vorrichtung nach zumindest einem der vorhergehenden Ansprüche,
**dadurch gekennzeichnet**,
dass der bodenseitig vorzugsweise eine Auffangwanne (30) aufweisende Arbeitsbereich (28) und der Aufgabe- und Entnahmebereich (32) durch eine Trennlinie (34) getrennt sind, die die Achse (15) durchsetzt oder in deren Nähe verläuft.

7. Vorrichtung nach zumindest einem der vorhergehenden Ansprüche,
**dadurch gekennzeichnet,**
dass im Bereich der Trennlinie weitere Säulen (36, 38, 40) angeordnet sind, von denen Demontageelemente und -einrichtungen wie Entnahmewerkzeuge, Trichter oder Absaugeinrichtungen ausgehen.

8. Vorrichtung nach zumindest einem der vorhergehenden Ansprüche,
**dadurch gekennzeichnet,**
dass der Arbeitsbereich (28) zumindest bereichsweise von der Arbeitsplattform (42) umgeben ist.

9. Vorrichtung nach zumindest einem der vorhergehenden Ansprüche,
**dadurch gekennzeichnet,**
dass die Arbeitsplattform (42) verschwenkbar, verschiebbar und/oder höhenverstellbar ausgebildet ist.

10. Vorrichtung nach zumindest einem der vorhergehenden Ansprüche,
**dadurch gekennzeichnet**,
dass die Arbeitsplattform (42) arbeitsbereichseitig zumindest abschnittsweise eine Absperrung wie Geländer aufweist, die schwenkbar und/oder absenkbar ausgebildet ist.
